# EUROPEAN PATENT APPLICATION

(11) **EP 1 202 600 A1**
(43) Date of publication of application: **02.05.2002**
(21) Application number: 01402736.1
(22) Date of filing: 22.10.2001
(51) Int. Cl.: H04Q 11/04

(54) **Access system to telecommunication networks in a multiservice environment**

(30) Priority: 31.10.2000 ES 200002616
(71) Applicant: ALCATEL, 75008 Paris (FR)
(72) Inventor: Neira Armario, Francisco, 28224 Pozuelo de Alarcon, Madrid (ES)
(74) Representative: Lamoureux, Bernard

(57) **Abstract**

Access system to telecommunication networks in a multiservice environment that provides a return channel by means of a 2B+D link, so that at both ends thereof there are adequate means for introducing and reading a determined subfield of each HDLC frame, where information relative to the service(s) used at present by the subscriber is located. Consequently, the system is capable of accommodating the services demanded in the 2B+D channels. The information relative to the current service is included in the SAPI subfield of the HDLC frame.

## Description

### OBJECT OF THE INVENTION

The present invention refers to a system for transporting information carrying data independently of its nature (voice, data, still images, video or others similar) to and from a user of a coaxial cable network.

In more specific terms, it refers to a system for satisfying the demand for broadband services by combining the unidirectional coaxial cable network with a narrowband bidirectional telecommunication network.

### STATE OF THE ART

At the present time, the users of communications networks are increasingly demanding multimedia services, consequently there is a growing demand for bandwidth in order to provide said multimedia services.

In the present state of development of telecommunications there is a clearly increasing convergence of voice, video and data services. Moreover, the creation of the http protocol and the enrichment of Web pages with still images, sound and animation have greatly boosted the size of the packets being exchanged and increased the requirement for means offering rapid access to information.

All this is leading to an ever-growing demand for interactive (bidirectional) broadband telecommunication services, though in practice the broadband mentioned is only employed by the user in the downward direction and for very short periods, remaining idle most of the time.

Nevertheless, the quest for solutions to meet this demand is heavily conditioned by the operators, by the infrastructures and by the legislation in force which, moreover, differ from one country to another.

Insofar as video transmission (analogue television) is concerned, the situation in some countries prior to the liberalisation of telecommunications, for example in the United States, was characterised by the existence of a relatively small number of cable operating companies with unidirectional networks and with significant penetration in the residential sector. On the other hand, in many other countries (among these, Spain) there were no cable operating companies, there being instead a great number of buildings with community antennas installed.

With this level of infrastructure and with the liberalisation of telecommunications, the different types of operator are endeavouring to develop solutions to satisfy the demand for broadband services.

Thus, the traditional telephone operators are trying not to lose the market and at the same time avoid the collapse of the telephone exchanges by introducing ADSL or VDSL. Nonetheless, transforming the telephone operator into a global operator based on ADSL or VDSL does not appear to be a logical solution, since in order to be capable of providing a service equivalent to that offered by a cable operator, it is necessary to deploy optical fibre to the subscriber neighbourhood, and the operator must also furnish, as well as the telephone line or basic ISDN access terminal, the corresponding ADSL or VDSL modem.

For their part, the cable operators are proposing the conversion of their unidirectional cable networks to bidirectional, offering telephony and fast downloading of Internet files, making use of a cable modem. However, the conversion of the unidirectional coaxial network of the operators into a bidirectional network does not appears to be the most logical solution either, since the new network would be less reliable, and more expensive and difficult to maintain.

If what is intended is merely to provide a fast Internet access service, thought could be given to using a return channel via radio, but this solution, as well as having equipment standardisation problems, would certainly meet with difficulties in obtaining authorisation for the use of frequencies from the regulating body.

If it is also wished to provide a fixed telephone service, the cable operator could envisage becoming a fixed telephony operator and laying hybrid networks of optical fibre, copper wire and coaxial cable, but to do this major investments are required, justification for which is not entirely clear.

He might give thought to becoming additionally a mobile telephony operator in order to offer a more global service and try to recover the investments made in the fixed telephone network, but again the problem arises of obtaining the pertinent licence granted by the regulating body.

A solution that appears more reasonable for meeting the demand for broadband services is the combination of a unidirectional broadband coaxial network with a bidirectional narrowband network. The coaxial cable network is employed to transmit the broadband information, and the narrowband network is employed as return and control channel for the broadband information.

A system which uses this combination of broadband and narrowband networks, respectively, is known by the US patent 5903816 "Interactive Television System and Method for Displaying Web-Like Stills with Hyperlinks", granted to E. Broadwin and J.C. Haass, and incorporated in the present patent application by reference.

The interactive television system (a broadband service) described in said patent comprises a video delivery system that provides a plurality of video and/or still image containing channels, and at least one subscriber television set that includes a display screen, and in which the television set of the subscriber is connected to the video delivery system. The television set of the subscriber also includes an interactive decoder logic or STB that receives the plurality of channels and selectively displays a channel based on the request of the user.

The mentioned state of the art has the drawback that it does not permit simultaneous compatibility of at least two services of a telephone call, Internet and interactive television.

### CHARACTERISATION OF THE INVENTION

A purpose of the invention is to make the use of Internet and/or interactive television compatible with the telephone service, in such a manner that an end user can make simultaneous use of at least two of the services mentioned.

Another purpose is to reduce, as much as possible, the traffic in a local switching office belonging to a public switched telephone network.

To this end, the system of the invention provides a return channel by means of a 2B+D link, such that at both extremities thereof there are adequate means for inserting and reading a determined subfield of each HDLC frame, in which is located information relative to the service(s) presently used by the subscriber.

Thus, the system mentioned is capable of accommodating the services required among the 2B+D channels that include the return channel. The information relative to the present service is included in the SAPI subfield of the HDLC frame.

### BRIEF DESCRIPTION OF THE DRAWINGS

A fuller explanation of the invention is given in the following description, based on the figures attached, in which:

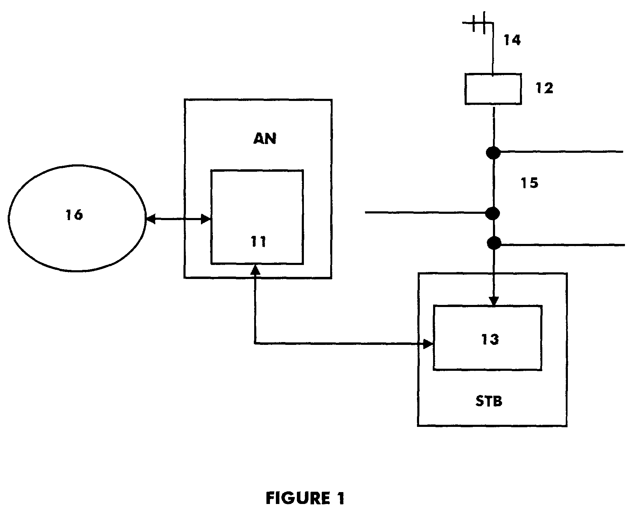

- figure 1 shows, in block diagram form, a preferred embodiment of an access system to telecommunication networks in a multiservice environment according to the invention.

### DESCRIPTION OF THE INVENTION

In figure 1 there appears a representation of an embodiment of the invention in the form of a block diagram. Thus, a broadcasting centre, not shown, of multimedia services such as television channels, interactive television or others, transmits contents to a plurality of end users, that pick up the signals through at least one antenna 14.

Said antenna 14 is joined to a coaxial cable distribution network 15, to which is connected an interactive decoder means STB (set top box), to which is connected at least one terminal equipment capable of reproducing at least one of the signals picked up by the antenna 14.

In turn, said interactive decoder means STB is joined by means of a link to an access node AN, which directs the traffic intended for and/or produced by a second terminal equipment of the end user to a telecommunication network 16 such as a public switched telephone network PSTN, an integrated services digital network ISDN, an Internet network or others.

The user receives and transmits various types of information carrying signals independently of its nature (voice, data, still images, video, Internet or others similar), if possible digitalised. As a consequence, the end user requires a large bandwidth in order to receive and send web pages, still images, sound and others over the telecommunication network 16.

The link that joins the access node AN and the interactive decoder means STB is a bidirectional link, such as a radio link, a fibre optic link, a copper-wire pair or other, capable of transporting any kind of information.

By way of example, the access node AN includes a first interface 11, which is capable of setting up a link with a second interface 12, located in the vicinity of the collective antenna 14 of the coaxial cable distribution network 15.

Thus, the second interface 12 receives signals transmitted from the first interface 11, and inserts them into said distribution network 15, that is, said network 15 transports to the user various data streams that have different origins.

As a consequence, the user connected to said distribution network 15 receives television signals, Internet, teleservices, multimedia services, interactive television, etc.

By way of example, the terminal equipment can be a telephone instrument, a television set, a device suitable for providing access to Internet such as an electronic computer or others.

In the course of a call, the interactive decoder means STB includes among others a third interface 13 that is joined to the first interface 11 of the access node AN by means of a bidirectional link (return channel). The interactive decoder means STB receives the signals from the various terminal equipment units and channels them to the access node. Likewise, said interactive decoder means STB forwards each of the received signals to the pertinent terminal equipment unit in order that it is reproduced by the appropriate terminal equipment for the received signal.

The third interface 13 includes means capable of routing user requests relative for example, to video on demand, downloading of content requested via Internet, calls or others, to the first interface 11. Based on the bandwidth presently occupied, the third interface 13 includes means capable of distributing the available bandwidth among the current requests.

As return channel it is possible to employ a copper wire pair of a standard telephone line (subscriber loop), coaxial cable, optical fibre, a radiolink or other similar. Consequently, the return channel is a bidirectional link, capable of routing at least one telephone call to/from the user.

During normal operation, when the user makes a request through the pertinent terminal equipment, said request is routed via the third interface 13 to the access node over the return channel.

To this end, the third interface 13 forwards the signals received from the terminal equipment via the third interface. Therefore, the return channel includes two B channels and one D channel, adopts a structure of the type 2B+D (integrated services digital network, ISDN). In brief, the user originating signals can be made compatible, in the course of a call, over the two B channels and the D channel.

Said third interface 13 carries out an allocation of channels on a basis of the 2B+D structure, in terms of the type of information to be transmitted to/from the access node.

Thus, the first interface 11 of the access node AN controls the state of the ISDN line, in such a manner that a request for a determined Internet content, for example, is directed to the Internet transport network.

Said first interface 11 receives signalling relative to the request over the D channel, within a subfield included in the address field that identifies the data link to which the HDLC (High Level Data Link Control) frames correspond. Said subfield contains 6 bits and is termed the service access point identifier SAPI. In all HDLC frames the presence of an address field, and hence of the subfield SAPI, is mandatory.

The third interface 13, based on the type of communication requested by the user, allocates a determined value to said subfield SAPI. Thus, the first interface 11 is capable of distinguishing whether an HDLC frame corresponds to signalling (SAPI = 0), to X.25 packets (SAPI = 16), link level management procedures (SAPI = 63) or others, since the SAPI adopts different values depending on the type of signal received from each terminal equipment of the user.

Once the HDLC frame has been received in the access node AN, the first interface 11 checks the value of the subfield SAPI, and, based on said value, routes the received signal to the corresponding telecommunication network 16, such as the PSTN, the Internet network or others.

The D channel transports signalling relative to the teleservice requested by the user, and from the foregoing it can be deduced that the case can arise in which a determined teleservice is provided without involving a local switching office and, therefore, the PSTN telephone network.

An advantage arising from the use of the HDLC protocol family, such as the LAP-D protocol, is that a connection at link level can be initiated from the local switching office, for example, or from a terminal equipment, there being no transfer of information during the periods of inactivity, and this permits various connections at link level to be open simultaneously.

The first interface 11 is capable of analysing partially the information contained in the HDLC frames, and depending on the information obtained, to direct the signal coming from the subscriber to the pertinent telecommunication network 16. As a consequence, it is not necessary to have link level processing means in the access node AN because the HDLC frame is not processed in its entirety.

Likewise, said first interface 11 is capable of analysing the HDLC frames coming from the local switching office and intended for the subscribers, for the purpose of forwarding a message to the terminal equipment that is presently occupying the return channel, in order that it release the same since the local switching office wishes to occupy the return channel for a communication to be controlled by it.

In brief, the third interface 13 generates frames according to an HDLC protocol which contains the information relative to the nature of the service (voice, data, video on demand, or others) requested by the user within the SAPI subfield, and for this purpose the SAPI subfield adopts a specific value for each service.

The HDLC frame formed is transmitted to the access node AN over the return channel, being analysed in the first interface 11, for the purpose of allocating channel B or 2B, and in the event of losing availability of the B channel, maintain the link over channel D. As a consequence, an ISDN basic access can be used as return channel for interactive broadcast services, Internet or others similar.

## Claims

1. **Access system to telecommunication networks in a multiservice environment** including an access node (AN) connected to an interactive decoder means (STB) by means of a return channel, **characterised in that** said access node includes a first interface (11) that is adapted to receive a request from a user via a third interface (13) included in the interactive decoder means (STB), in the course of a call.

2. **Access system** according to claim 1, **characterised in that** said return channel is a basic link of an ISDN line.

3. **Access system** according to claim 1, **characterised in that** said first interface (11) is joined to a second interface (12) connected to a collective antenna (14) of a coaxial cable distribution network (15), which is joined to said interactive decoder means (STB) via the third interface (13), connected to said first interface (11) by means of said return channel of 2B+D structure.

4. **Access system** according to claim 1, **characterised in that** said first interface (11) is adapted for sending information carrying data signals to the second interface (12), in the course of a call.

5. **Access system** according to claim 3, **characterised in that** said second interface (12) is adapted for inserting the received signals into the coaxial cable distribution network (15), in such a manner that said interactive decoder means (STB) is adapted for separating them and distributing them among terminal equipment units of the user.

6. **Access system** according to claim 1, **characterised in that** said third interface (13) is adapted for sending over the D channel of said return channel requests from a user received through said interactive decoder means (STB), in the course of a call.

7. **Access system** according to claim 6, **characterised in that** said third interface (13) is adapted for allocating different values to a subfield of an HDLC frame, depending on the service requested by the user.

8. **Access system** according to claim 7, **characterised in that** said subfield is termed the service access point identifier (SAPI).

9. **Access system** according to claim 7, **characterised in that** said first interface (11) is adapted for analysing partially the HDLC frame, as it checks the value of said service access point identifier (SAPI).

10. **Access system** according to claim 9, **characterised in that** said first interface (11) is adapted for forwarding the user request received over the pertinent telecommunication network (16), depending on the value detected in said service access point identifier (SAPI).

11. **Access system** according to claim 1, **characterised in that** said first interface (11) is adapted for distributing the bandwidth of the return channel on a basis of the service requested by the user.

12. **Access method to telecommunication networks in a multiservice environment** including an access node (AN) connected to an interactive decoder means (STB) by means of a return channel, **characterised in that** said access method includes the step of receiving at a first interface (11) a user request sent from a third interface (13) included in the interactive decoder means (STB), in the course of a call.

13. **Access method** according to claim 12, **characterised in that** said access method includes the steps of:
1) allocating a determined value to a service access point identifier (SAPI), on the basis of the request made by a user via a third interface (13) of said interactive decoder means (STB), and
2) analysing said service access point identifier (SAPI), for the purpose of forwarding said user request to the pertinent telecommunication network (16).

14. **Access method** according to claim 13, **characterised in that** said access method includes the step of distributing the bandwidth of said return channel, based on the result of the analysis of said service access point identifier (SAPI).

15. **Access node** (11) adapted for carrying out any step of claims 12 to 14.

16. **Interactive decoder means** (STB) adapted for carrying out any step of claims 12 to 14.
